# EUROPÄISCHE PATENTANMELDUNG

(11) **EP 0 601 491 A1**
(43) Veröffentlichungstag der Anmeldung: **15.06.1994**
(21) Anmeldenummer: 93119489.8
(22) Anmeldetag: 03.12.1993
(51) Int. Cl.: H01M 2/12, F16K 15/14, B65D 51/16

(54) **Verschlussmittel und Dichtungsventil für Behälteröffnungen**

(30) Priorität: 11.12.1992 DE 4241943
(71) Anmelder: Busak + Shamban GmbH & Co., D-70565 Stuttgart (DE)
(72) Erfinder: Schollenberger, Gerd, D-74372 Sersheim (DE); Edlund, Roy, D-70771 Leinfelden-Echterdingen (DE)
(74) Vertreter: KOHLER SCHMID + PARTNER

(57) **Zusammenfassung**

Ein Verschlußmittel und Dichtungsventil 10 für Behälteröffnungen ist aus einem Gehäuse 11, 12 gebildet, in dem eine Dichtung 13 angeordnet ist. Die Dichtung 13 verschließt einen Spalt zwischen den Gehäuseteilen 11, 12. Die Gehäuseteile 11, 12 weisen Bohrungen 14, 14' und 15 auf, durch die ein Fluid die Gehäuseteile 11, 12 durchströmen kann, sofern die Dichtung 13 einen Spalt freigibt. Die Dichtung 13 weist einen Dichtungswulst 20 auf, dem Federwulste 22, 23, 24 gegenüberliegen.

## Beschreibung

Die Erfindung betrifft ein Verschlußmittel und Dichtungsventil für Behalteröffnungen, das aus einem Gehäuse mit einem Entgasungsstutzen besteht, in dem ein Abdichtungselement angeordnet ist, das einen umlaufenden Dichtungswulst aufweist, der im drucklosen Zustand auf einer Dichtfläche aufliegt und im druckbeaufschlagten Zustand von der Dichtfläche beabstandet ist.

Ein derartiges Element ist durch das deutsche Gebrauchsmuster G 8534 913.5 bekanntgeworden.

Beispielsweise benötigen Akkumulatorbatterien ein Entgasungsventil, welches das Austreten von Batteriesäure und H₂-Gas bei normalen Druckverhältnissen sicher verhindert und bei definierten Überdrücken innerhalb der Batteriezelle öffnet und eine Entgasung gestattet. Gleichzeitig muß gewährleistet sein, daß in die Zellen der Akkumulatorbatterien kein Fluid von außen unbeabsichtigt einströmt, z. B. Luft. Akkumulatorbatterien, insbesondere Bleiakkumulatoren für Kraftfahrzeuge sind Massenartikel und dementsprechend müssen diese Entgasungsventile und Verschlußmittel möglichst kostengünstig hergestellt werden.

Das bekannte Verschlußmittel nach G 8534 913.5 weist als Verschlußmittel eine scheibenförmige Dichtung mit einem konischen Dichtansatz auf. Die scheibenförmige Dichtung ist mit einer Feder verbunden, die sich wiederum im Gehäuse abstützt. Die Feder drückt den konischen Dichtansatz der Dichtung gegen einen Ventilsitz. Bei Überdruck im Innern eines zu verschließenden Behälters wird die Dichtung gegen die Kraft der Feder abgehoben, so daß das Fluid entweichen kann. Bei diesem bekannten Verschlußmittel erfolgt die Lagefixierung der Dichtung im wesentlichen über den konischen Dichtansatz und den Ventilsitz. Das hat zur Folge, daß bei geöffnetem Verschlußmittel diese Lagefixierung aufgehoben ist. Die Dichtung ist nur noch durch die Feder und die Gehäuseinnenwand seitlich geführt. Das bekannte Verschlußmittel wird nur im Bereich der Ventilsitzöffnungdruck druckbeaufschlagt.

Ein weiteres Dichtungsventil nach P 41 35 711.6 weist ein - Deckelteil auf und an diesem Deckelteil ist ein Wandteil ausgeformt. Am Wandteil ist ein Ringwulst vorgesehen, der um den zylinderförmig ausgebildeten Stopfen ringsum läuft. Der Dichtungswulst ermöglicht den Ausgleich von bei der Massenfertigung des Dichtungsventils auftretenden Toleranzschwankungen des Innendurchmessers des Wandteils und sichert, daß der Dichtungswulst immer an der Außenwand des Entgasungsstutzens dichtend anliegt. Das bekannte Dichtungsventil liegt nur linienförmig an der Wandung des Entgasungsstutzens an und somit werden unerwünschte Adhäsionskräfte zwischen der Innenseite des Wandteils und der Außenwand des Entgasungsstutzens verhindert.

Der Erfindung liegt die Aufgabe zugrunde, ein Ventil der bekannten Art weiterzubilden und ein Druckansprechverhalten des Ventils zu schaffen, das sehr fein ist und auf geringste Druckschwankungen im abzudichtenden Behälter abstimmbar ist.

Die Aufgabe wird erfindungsgemäß dadurch gelöst, daß das Abdichtungselement als gummielastische Dichtung ausgebildet ist, die Mittel zur Lagefixierung aufweist, daß der Dichtungswulst auf einer druckbeaufschlagten ersten Seite der Dichtung als mindestens eine Dichtkante ausgebildet ist, daß die Dichtung auf einer zweiten Seite auf den Dichtungswulst einwirkende, mit der Dichtung einstückig verbundene Federmittel aufweist, die Federwulste bilden, und die aus dem Material der Dichtung gebildet sind, und daß die Federwulste auf einer Gehäusewand abstützbar sind.

Das erfindungsgemäße Verschlußmittel und Dichtungsventil hat damit den Vorteil, daß bei einem im Behälter entstehenden unzulässigen Druck die Kraft von Federmitteln der erfindungsgemäßen Dichtung zu überwinden sind, damit ein Spalt im Gehäuse freigegeben wird, durch den das druckerhöhte Fluid in die Atmosphäre abströmen kann. Die Federmittel können sehr exakt auf zu erwartende Druckanstiege abgestimmt werden und das gesamte Element kann als eine Baueinheit gebaut werden. Das Verschlußmittel und Dichtungsventil ist nach Fertigstellung nur noch in den Entgasungsstutzen eines Behälters einzuschieben und danach ist dieser Entgasungsstutzen sicher verschlossen und es ist gewährleistet, daß in der Akkumulatorbatterie keine unzulässigen Drücke entstehen. Die Dichtung selbst ist in einem Gehäuse geschützt angeordnet, so daß das erfindungsgemäße Verschlußmittel und Dichtungsventil wartungsfrei ist und nicht unbeabsichtigt beschädigt werden kann.

Ein weiterer Vorteil ist, daß die Dichtung einfach zu fertigen ist und die Federmittel sind aus demselben Material wie die Dichtung selbst gebildet. Die Federmittel, der oder die Federwulste, können schon bei der Fertigung der Dichtung an einer Seite der Dichtung ausgeformt sein. Auf der anderen Seite der Dichtung ist die Dichtkante ausgebildet. Die Spitze der Dichtkante ist vorteilhaterweise aus der Schnmittlinie zweier Kegelflächen gebildet. Damit ist gewährleistet, daß die Dichtkante nur linienförmig auf einer angrenzenden Dichtfläche anliegt.

In einer bevorzugten Ausgestaltung ist das Verschlußmittel und Dichtungsventil mit einer lochscheibenförmigen Dichtung versehen und am äußeren Rand der Dichtung ist eine Befestigungsleiste ausgebildet, die die Dichtung im Gehäuse ortsfest fixiert und im Bereich der Mitte der Dichtung ist ein Durchbruch vorgesehen, an den auf einer ersten Seite der umlaufende Dichtungswulst grenzt.

In einem Außenbereich ist die Dichtung über eine Befestigungsleiste fest im Gehäuse gehalten und in einem weiteren Bereich, bevorzugt in dem Bereich der Mitte der scheibenförmigen Dichtung ist ein Durchbruch vorgesehen, durch den bei geöffnetem Spalt zwischen den Gehäuseteilen das unter Druck stehende Fluid aus dem Behältnis abströmen kann.

In einer weiteren Ausführungsform ist die Dichtung scheibenförmig im Gehäuse ausgebildet und im Bereich der Mitte sind Ausbildungen zur Lagefixierung der Dichtung im Gehäuse vorge-sehen. Im Bereich des äußeren Randes der Dichtung sind auf einer ersten Seite der umlaufende Dichtungswulst und auf einer zweiten Seite sind ein oder mehrere Federwulste gummielastischer Art ausgebildet.

Gegenüber der scheibenförmig ausgebildeten Dichtung weist dieser Dichtkörper den Vorteil auf, daß am Dichtkörper selbst kein Durchbruch oder Durchbrüche ausgebildet werden müssen.

In weiterer Ausgestaltung der Erfindung ist das Verschlußmittel und Dichtungsventil als Stopfen ausgebildet, der sich aus einem ersten Gehäuseteil und einem zweiten Gehäuseteil zusammensetzt und zwischen dem ersten und dem zweiten Gehäuseteil ist die Dichtung angeordnet. Dabei verschließt die Dichtung einen Fluidstromweg, der durch beide Gehäuseteile verläuft. In den Gehäuse-teilen sind Bohrungen mit unterschiedlichem Durchmesser vorgesehen, die den Fluidstromweg bilden. Die Bohrungen sind derart ausgebildet, daß die Dichtung selbst möglichst flächenhaft und über eine große Gesamtfläche vom Fluid druckbeaufschlagt werden kann. Dadurch kann das Ansprechverhalten der Dichtung exakt vorbestimmt werden.

Der drucklose Zustand ist bei dem erfindungsgemäßen Verschlußmittel und Dichtungsventil dann gegeben, wenn die Dichtung mit einem Fluiddruck bis zu p = 50 mbar beaufschlagt ist. Bei Fluiddrücken p > 50 mbar befindet sich die Dichtung im druckbeaufschlagten Zustand.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sonder haben vielmehr beispielhaften Charakter.

Die Erfindung ist in der Zeichnung dargestellt und wird anhand von Ausführungsbeispielen näher erläutert. Es zeigt:
- Fig. 1: einen Querschnitt durch ein erfindungsgemäßes Verschlußmittel und Dichtungsventil;
- Fig. 2: in drei Beispielen A, B und C vergrößerte Ausschnitte von Dichtkantenbereichen von Dichtungen, wie sie im erfindungsgemäßen Verschlußmittel und Dichtungsventil einsetzbar sind.

Die Figuren der Zeichnung zeigen den erfindungsgemäßen Gegenstand stark schematisiert und sind nicht maßstäblich zu verstehen. Die gegenständlichen Merkmale sind in den einzelnen Figuren so dargestellt, daß ihr Aufbau gut gezeigt werden kann.

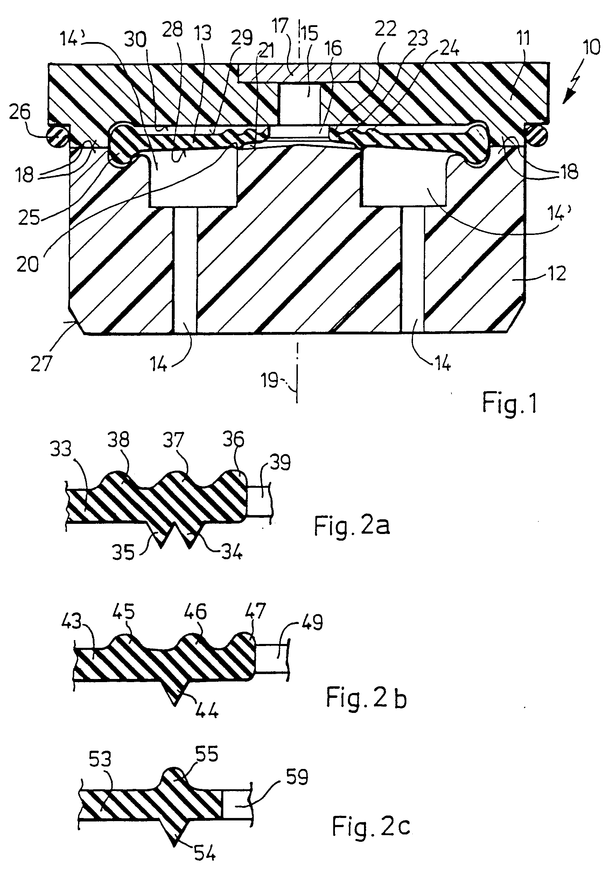

Fig. 1 zeigt mit 10 ein Verschlußmittel und Dichtungsventil, das aus einem ersten Gehäuseteil 11 und einem zweiten Gehäuseteil 12 zusammengesetzt ist. Zwischen dem ersten und zweiten Gehäuseteil 11, 12 ist eine Dichtung 13 aus einem gummielastischen Material, wie beispielsweise Silikonkautschuk PU, PVC, TPE (thermoplastische Elastomere) oder Fluorelastomere, wie FPM, angeordnet.

Das erste Gehäuseteil 11 weist eine Bohrung 14 und eine Bohrung 14' auf, die in der Figur von der Dichtung 13 abgedeckt sind. Das zweite Gehäuseteil 12 weist eine weitere Bohrung 15 auf, die strömungstechnisch mit der Bohrung 14, 14' in Verbindung steht, sofern die Dichtung 13 in den Gehäuseteilen 11, 12 nicht angeordnet ist oder den Durchgang freigibt. Die Dichtung 13 ist mit einem Durchbruch 16 versehen, der unterhalb der Bohrung 15 angeordnet ist. Im ersten Gehäuseteil 11 ist die Bohrung 15 von einem Filter 17 verschlossen, der aus einem Material ge-fertigt ist, das gasdurchlässig und hitzebeständig ist. An einander angrenzenden Seitenflächen 18 sind die Gehäuseteile 11, 12 beispielsweise verschweißt. Das in der Figur gezeigte Verschlußmittel und Dichtungsventil 10 ist bezüglich einer Achse 19 symmetrisch aufgebaut.

Über die Dichtung 13 wird ein zwischen den Gehäuseteilen 11, 12 gebildeter Spalt abgedichtet, in dem ein Dichtungswulst 20 der Dichtung 13 auf einer Dichtfläche 21 fest aufliegt. Federwulste 22, 23, 24 liegen zumindest teilweise am ersten Gehäuseteil 11 an. Der äußere Rand der Dichtung 13 ist als Befestigungsleiste 25 ausgebildet, die formschlüssig in Ausnehmungen in den Gehäuseteil 11, 12 paßt.

Am Verschlußmittel und Dichtungsventil 10 sind noch ein gummielastischer O-Ring 26 angeordnet und am zweiten Gehäuseteil 12 ist eine Einführungsschräge 27 ausgebildet, damit das Verschlußmittel und Dichtungsventil 10 einfach und sicher in einen Entgasungsstutzen eingeschoben werden kann. Am zweiten Gehäuseteil 12 können noch Verrastmittel vorgesehen sein, die in der Figur nicht gezeigt sind, damit das Verschlußmittel und Dichtungsventil 10 sicher im Entgasungsstutzen gehalten ist.

Die in der Figur gezeigte Dichtung 13 wirkt derart, daß ein durch die Bohrung 14, 14' strömendes Fluid auf einer ersten Seite 28 der Dichtung 13 ansteht. Die Federwulste 22, 23, 24 sind an einer zweiten Seite 29 der Dichtung 13 ausgebildet und liegen an einer Gehäusewand 30 des ersten Gehäuseteils 11 an. Die Gehäuseteile 11, 12 können aus einem zähelastischen Kunststoff gefertigt sein. In der Fig. 1 liegt im drucklosen Zustand nur ein Federwulst 22 an der Gehäusewand 30 an. Es können jedoch auch schon im drucklosen Zustand mehrere Federwulste 22, 23, 24 an der Gehäusewand 30 anliegen.

Im drucklosen Zustand, d.h. hier, im normalen Betriebsdruckbereich zwischen 0 und 50 Millibar Überdruck liegt die Dichtkante des Dichtungswulstes 20 dichtend auf der Dichtfläche 21 auf. Erhöht sich nun der Fluiddruck in der Bohrung 14, 14' so wirkt das Fluid axial gerichtet großflächig auf die Dichtung 13 und der Dichtungswulst 20 hebt von der Dichtfläche 21 ab und gibt den Spalt zwischen dem ersten Gehäuseteil 11 und dem zweiten Gehäuseteil 12 frei: Das unter erhöhtem Druck stehende Fluid kann über den Durchbruch 16 und die Bohrung 15 sowie über das Filter 17 aus dem Entgasungsstutzen ausströmen.

Fig. 2a zeigt einen Abschnitt einer Dichtung 33 im Bereich von Dichtkanten 34 und 35. Den Dichtkanten 34, 35 sind Federwulste 36, 37, 38 zugeordnet, die unmittelbar den Dichtkanten 34, 35 gegenüberliegen. An die Dichtkanten 34, 35 wie auch an die Federwulste 36, 37, 38 grenzt ein Durchbruch 39, durch den unter Druck stehendes Fluid dann strömen kann, wenn die Dichtkanten 34, 35 nicht auf einer Dichtfläche dichtend aufliegen.

Fig. 2b zeigt eine weitere Ausführungsform einer Dichtung 43 im Bereich einer Dichtkante 44 im Ausschnitt. Der Dichtkante 44 sind Federwulste 45, 46, 47 zugeordnet, wobei nicht unmittelbar der Dichtkante 44 gegenüberliegend ein Federwulst ausgebildet ist. Fig. 2b zeigt eine lochscheibenförmige Dichtung 43, die einen Durchbruch 49 aufweist.

Fig. 2c zeigt eine weitere Ausführungsform einer Dichtung 53 im Bereich der Dichtkante 54. Der Dichtkante 54 ist unmittelbar gegenüberliegend ein Federwulst 55 zugeordnet und an die Dichtkante 54 und an den Federwulst 55 grenzt ein Durchbruch 59.

Die Dichtung selbst kann auch als Band ausgebildet sein, das lochscheibenförmig zwischen zwei Gehäuseteile gelegt werden kann. Die Dichtung kann aber auch aus einer Scheibe bestehen, wobei im Bereich der Mitte die Befestigungsmittel ausgebildet sind und im Außenbereich ist die Dichtkante und der Federwulst ausgebildet.

Ein Verschlußmittel und Dichtungsventil 10 für Behälteröffnungen ist aus einem Gehäuse 11, 12 gebildet, in dem eine Dichtung 13 angeordnet ist. Die Dichtung 13 verschließt einen Spalt zwischen den Gehäuseteilen 11, 12. Die Gehäuseteile weisen Bohrungen 14, 14' und 15 auf, durch die ein Fluid die Gehäuseteile 11, 12 durchströmen kann, sofern die Dichtung 13 einen Spalt zwischen den Gehäuseteilen 11, 12 freigibt. Die Dichtung 13 weist einen Dichtungswulst 20 auf, dem Federwulste 22, 23, 24 gegenüberliegen.

## Patentansprüche

1. Verschlußmittel und Dichtungsventil für Behälteröffnungen, das aus einem Gehäuse (11, 12) mit einem Entgasungstutzen (15) besteht, in dem ein Abdichtungselement (13) angeordnet ist, das einen umlaufenden Dichtungswulst (20) aufweist, der im drucklosen Zustand auf einer Dichtfläche (21) aufliegt und im druckbeaufschlagten Zustand von der Dichtfläche (21) beabstandet ist, dadurch gekennzeichnet, daß das Abdichtungselement als gummielastische Dichtung (13) ausgebildet ist, die Mittel zur Lagefixierung (25) aufweist, daß der Dichtungswulst (20) auf einer druckbeaufschlagten ersten Seite (28) der Dichtung (13) als mindestens eine Dichtkante (34, 35; 44; 54) ausgebildet ist, daß die Dichtung (13) auf einer zweiten Seite (29) auf den Dichtungswulst (20) einwirkende mit der Dichtung (13) einstückig verbundene Federmittel (22, 23, 24; 36, 37, 38; 45, 46, 47; 55) aufweist, die Federwulste bilden, die aus dem Material der Dichtung (13) gebildet sind, und daß die Federwulste auf einer Gehäusewand (30) abstützbar sind.

2. Verschlußmittel und Dichtungsventil nach Anspruch 1, dadurch gekennzeichnet, daß die Dichtung (13; 33; 43; 53) lochscheibenförmig ausgebildet ist und am äußeren Rand eine Befestigungsleiste (25) aufweist, die die Dichtung (13; 33; 43; 53) im Gehäuse (11, 12) ortsfest fixiert und daß im Bereich der Mitte der Dichtung ein Durchbruch (16; 39; 49; 59) vorgesehen ist, an den der auf der ersten Seite (28) ausgebildete Dichtungswulst (20) grenzt.

3. Verschlußmittel und Dichtungsventil nach Anspruch 1, dadurch gekennzeichnet, daß die Dichtung scheibenförmig im Gehäuse (11, 12) ausgebildet ist und im Bereich der Mitte Ausbildungen zur Lagefixierung (25) im Gehäuse (11, 12) aufweist und daß im Bereich des äußeren Rands der Dichtung (13) auf der ersten Seite (28) der umlaufende Dichtungswulst (20) und auf der zweiten Seite (29) mindestens ein Federwulst (22, 23, 24) ausgebildet ist.

4. Verschlußmittel und Dichtungsventil nach einem der Ansprüche 1 bis 3, dadurch gekennzeichnet, daß das Verschlußmittel und Dichtungsventil (10) als Stopfen ausgebildet ist, der sich aus dem ersten Gehäuseteil (11) und dem zweiten Gehäuseteil (12) zusammensetzt, und daß zwischen dem ersten und dem zweiten Gehäuseteil (11, 12) die Dichtung (13) angeordnet ist, die einen Fluidstromweg durch die beiden Gehäuseteile (11, 12) verschließt.

5. Verschlußmittel und Dichtungsventil nach einem der Ansprüche 1 bis 4, dadurch gekennzeichnet, daß die Druckbeaufschlagung durch das im Behälter befindliche Fluid nahezu auf der gesamten Fläche der Dichtung (13) erfolgt.
